# EUROPEAN PATENT SPECIFICATION

(11) **EP 3 138 765 B1**
(45) Date of publication and mention of the grant of the patent: **17.10.2018**
(21) Application number: 16183246.4
(22) Date of filing: 08.08.2016
(51) Int. Cl.: B62J 15/04

(54) **SPLASH GUARDS FOR BICYCLE FENDERS**
SPRITZBLECHABSCHNITT INSBESONDERE FÜR FAHRRÄDER
SECTION DE GARDE-BOUE POUR BICYCLETTE

(30) Priority: 21.08.2015 IT UB20153187
(43) Date of publication of application: 08.03.2017
(73) Proprietor: Eurofender s.r.l., 35136 Padova (PD) (IT)
(72) Inventor: Silvestri, Alberto, 35136 Padova (IT)

(56) References cited:
- EP-A1- 1 595 776
- EP-A1- 1 837 273
- CN-U- 202 657 165
- NL-C1- 1 025 604

## Description

The object of this invention concerns a splash guard for bicycle fenders.

### Prior art

It is well known that the most expensive bicycles, the ones that are the best equipped and have elegant finishing, have a splash guard at the rear end of the fender.

Said splash guard is nothing other than an enlargement of the surface of the fender with a shape and a profile that blocks and contains anything raised by the tyre of the wheel, namely all that dirt (or other solid or liquid elements) that can soil or disturb the cyclist or other people in the vicinity of the path of the bicycle.

The configuration of a standard splash guard is traditionally laminar with the same shape and curvature for the part adjacent to and overlapping the fender, while it has a different curvature and enlarged surface in that part of the splash guard that extends beyond the fender.

An example of said standard splash guard is shown in EP1595776.

The material of such a splash guard, since very often it has to withstand more substantial stress and from variable directions, is usually a plastic material that is moderately flexible, wear resistant and resistant to blows.

Like every other element of the bicycle, the requirements are those of reliability and cost effectiveness.

This cost should not be understood only as a cost of the accessory itself, but also as regards the assembly and installation on the fender.

Traditionally splash guards were fixed on the rear end of the fender (that of attachment of the wheel in the forward direction) by means of a series of metallic rivets that cross the fender and kept the splash guard solidly attached to the fender itself.

This implementation, without doubt simple and reliable is, however, not one that can be immediately created because it consists of numerous steps and an extensive manual intervention by the operator.

After the punching of the fender in several places for the rivets, the splash guard must be supported exactly in place, and held there until the rivets, which are inserted in the seats provided on the splash guard and which run through the punched holes, have been peened.

It is quite clear that this sequence requires particular tooling, with considerable expenditure of time, resources and manpower.

But above all, this operation, which is irreversible, must be carried before any assembly, with the result that it cannot be carried out by the end user or by the assembler during the assembly of the bicycle.

Also the transport of the wheel guards fitted with a splash guard requires much more space due to the fact that they are offset from each other, instead of being kept next together, as the fenders alone and without splash guard could be. Another type of currently used splash guard is characterised by the fact that the splash guard is assembled on the end part of the fender, which has been suitably pre-drilled near the ends, by means of an interlocking coupling. Quick and easy assembly is unfortunately prone to easy loss in the common use of the bike as a result of jolts when cycling or small accidental bumping in the racks where bicycles are parked. It is therefore been seen that where there are no solid fastening systems, such as screws or rivets, it is possible to lose the splash guard. To deal also with this drawback, another solution was developed that was less economical and less practical than the previous one, and one that does not require specific tools or special technical knowledge for its assembly: in this last mode, the splash guard is held on the fender using the rods holding the fender.

In the contingent case the type of fender holder joined at the top by a connecting arch element is taken into consideration.

In particular, advantage is taken of the arch retention element of the ends of the rods for retaining also the splash guard, avoiding also having to make additional holes on the fender in addition to those already provided for the fastening between the fender and the fender stay rods.

Even if this method of connection allows you to combine the two requirements of installation and assembly on the fender of the relative support rods with the splash guard, we need to take into account that it also introduces some quite big drawbacks.

The installation must be carried out during the assembly of the bicycle since the fender rod, which is underneath the fender itself, cannot easily be accessed for the assembly in the narrow space between the wheel and the fender itself.

And precisely this installation underneath the fender of the fender rods is the most critical aspect.

In fact, in this installation mode much of the dirt is retained in the discontinuity of the internal surface of the fender, which in the long run forms hard layers making cleaning difficult.

To minimise this discontinuity, the retention elements on the fender stay rods are reduced to a minimum, reducing the sections and therefore the retention strength of the fender rods.

### Objects of the invention

A primary object of this invention is to make available a new splash guard for the terminal end of bicycle fenders that overcomes all the drawbacks of the prior art.

Another object of this invention is to make available a new splash guard that is easy to install.

A further object of this invention is to make available a new splash guard that can be installed also after the assembly of the bicycle.

An important object of this invention is to make available a new splash guard that can be connected to fender rods in a secure and reliable way.

An even further object of this invention is to make available a new splash guard that can be installed without the need for special tools by a single operator.

Another object of this invention is to make available a new splash guard that is composed of a limited number of pieces.

A further object of this invention is to make available a new splash guard that can be replaced if damaged or broken without having to change the entire fender.

### Explanation of the invention

The splash guard device for the terminal end of fenders comprises at least two elements; a first element, the splash guard main body, which is joined to the outside of a fender and a second element, cover or plate, which overlaps the body providing the fixing, and preventing the body from disconnecting from the fender; said body is capable of joining to the end external surface of a fender, by means of at least one finned overhang, i.e. having fins, which protrudes from the body toward the fender, and which, after passing through a corresponding hole, a T-shaped opening, in the underlying fender, with their fins arranged below the fender prevents the body from detaching by lifting up from the fender itself; said second element, cover or plate, is joined to the outside to said splash guard main body, with the first and second connection devices; said first connection devices are near a first front end of the plate and running through an aperture in the fender, they constitute an end stop for the movement of the body, preventing the reverse movement of the body joining to the fender body, while said second connection devices are near the rear end of the plate and are connected to the body after overcoming an initial interference.

### Advantageous features of the invention

Advantageously, said splash guard main body also has one or more seats, on its outer surface and opposite to the one that comes in contact with the mudguard, to accommodate, at least partially, the connecting arch of the fender stay rods.

Advantageously said seat is more defined around said connection arch of the fender stay rods with the installation of said plate, which includes an upper part of said seat.

Advantageously, said upper part of said seat compresses and pushes the arch of the fender stay rods under pressure into the seat in the upper part of the body.

Advantageously, said plate acts as a lever, hinged with its first connection devices with the fender inside the opening in the fender itself and with the lever arm defined by the cover itself and the pressure thrust between the hinge and the arm of the lever.

Conveniently, the body also has a cut-outs in the front part at the opening of the underlying fender for the passing of the first connection devices of the plate with the fender.

Advantageously, said first connection devices of the lid are composed of an overhang with a curved profile which requires the installation of a plate using a rotation manoeuvre until the lid engages with the second rear devices on the matching part of the body.

Advantageously the arch of the fender stay rods has a recess or hollow in a central position and facing the inside of the arch and thus towards the body, which is joined, by cooperating with the interlocking with a corresponding centring raised part on the outer surface of the body, facilitating both the connection in the installation phase for a centring between the arch and the body and also for stiffening the connection with a centring joint once the assembly has been completed.

Very advantageously, near the finned overhang, there is an additional sawtooth prominence, as a pre-assembly prominence, which rises up from the inner surface of the body and also faces the fender. Said pre-assembly prominence, forcibly enters, with its tooth, due to the elasticity of the materials, overcoming an initial interference, and engages the T-shaped hole, and in particular the top cut of the T-shape, after which the relative sliding between the body and fender has brought the overhang near the beginning of the vertical rod of the T-shape. In this situation there is a provisional fixing, but one that is sufficiently stable, between the body and the fender pending the plate being positioned. This possibility of a provisional installation and fixing is of help to the operator during the assembly and for the pre-assembly of the manufacturer directed at the assemblers who will complete and customise the bicycle according to end-user requirements by mounting the plate and eventually the rods.

These advantages and other objects are all achieved by the splash guard for a fender, in accordance with the accompanying claims.

### Brief description of the drawings

The technical features of the invention, according to the aforesaid aims, can clearly be seen in the content of the claims reported below, and its advantages will become more readily apparent in the detailed description that follows, made with reference to the accompanying drawings, which illustrate a preferred embodiment, which is purely exemplary and not limiting, where:

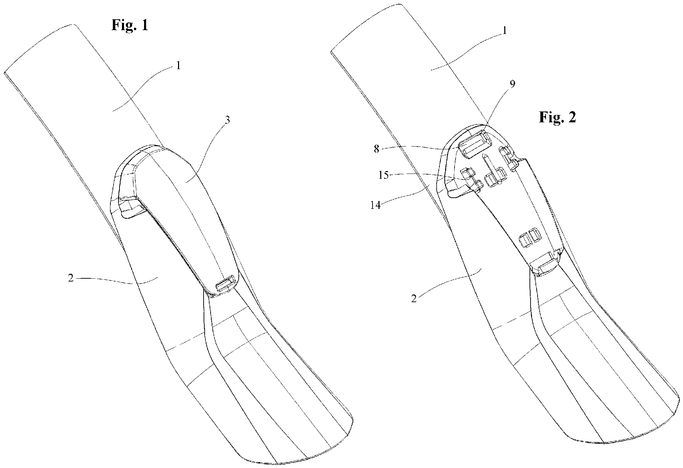

fig. 1 shows the device of the invention from a perspective top-down view applied on the end part of a fender;
fig. 2 shows the device of fig. 1 with the top plate removed;

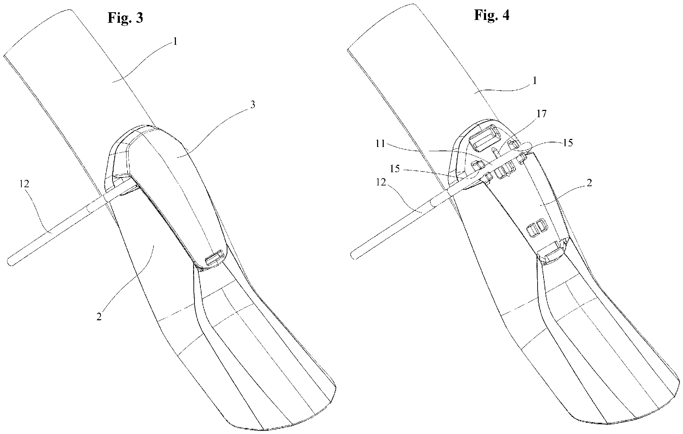

fig. 3 shows the device of fig. 1 that holds the connecting arch of the fender stay rods between the body and the corresponding upper closing plate;
fig. 4 shows the device of fig. 3 with the top plate removed, showing the arch within the seat on the upper part of the body;

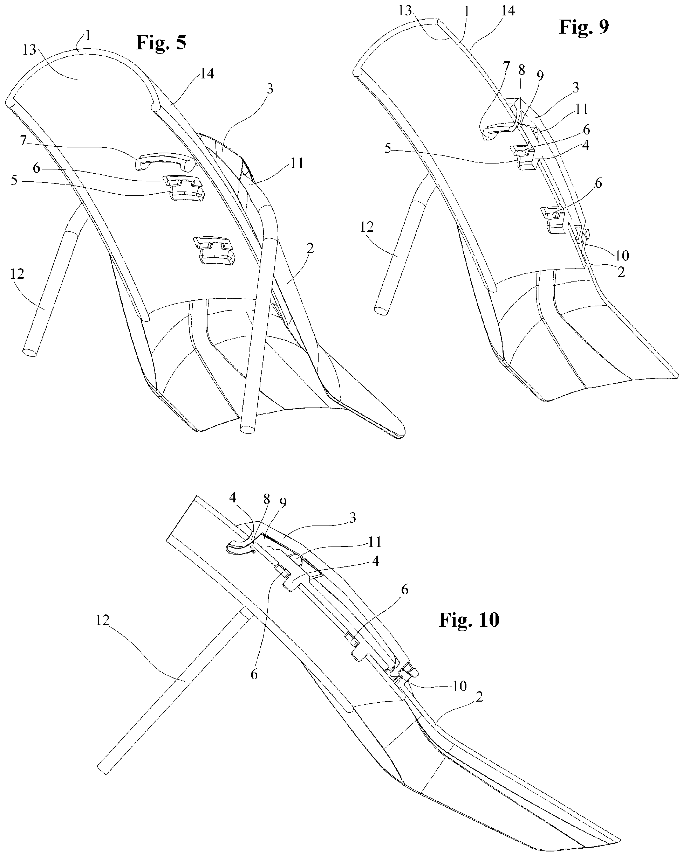

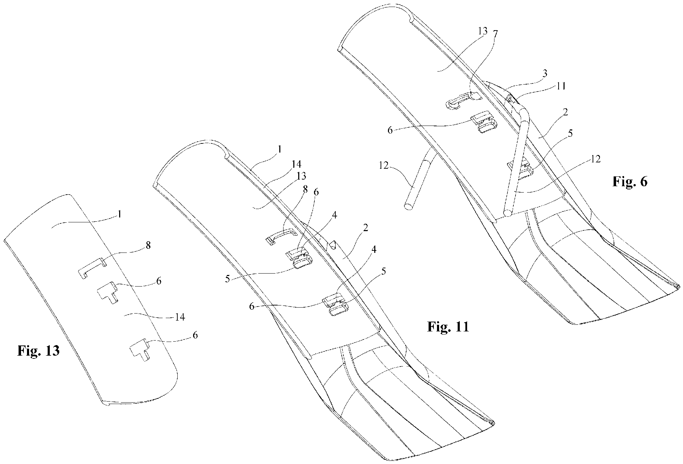

figs. 5 and 6 show the device of fig. 3 from two different perspective views from below, highlighting the connection devices of the body with the fender and the connection devices of the small plate with the fender with the corresponding openings on the fender itself;

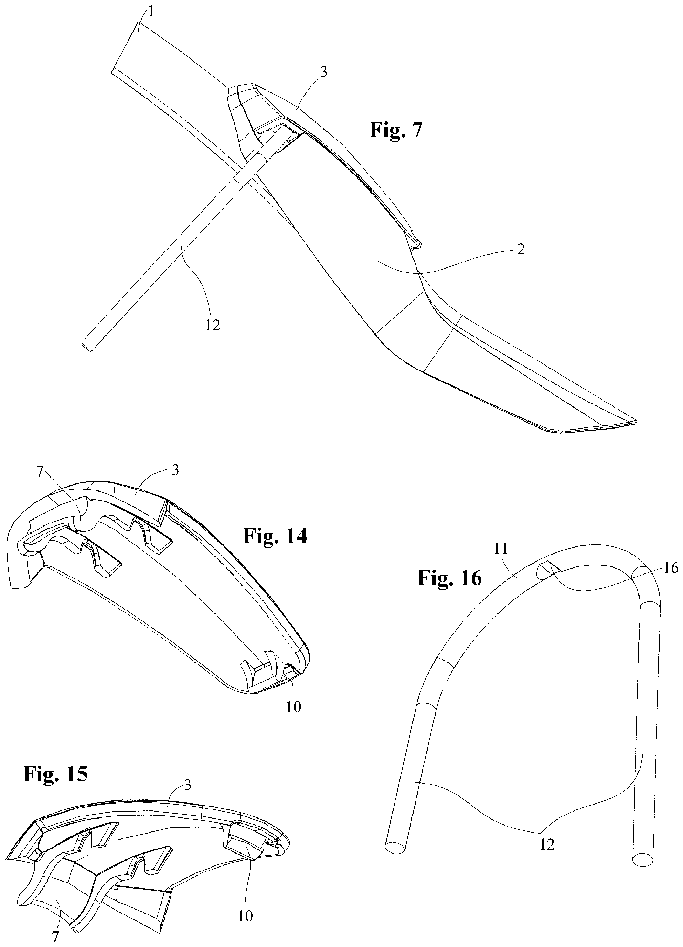

fig. 7 shows the device of fig. 3 from a side plan view;

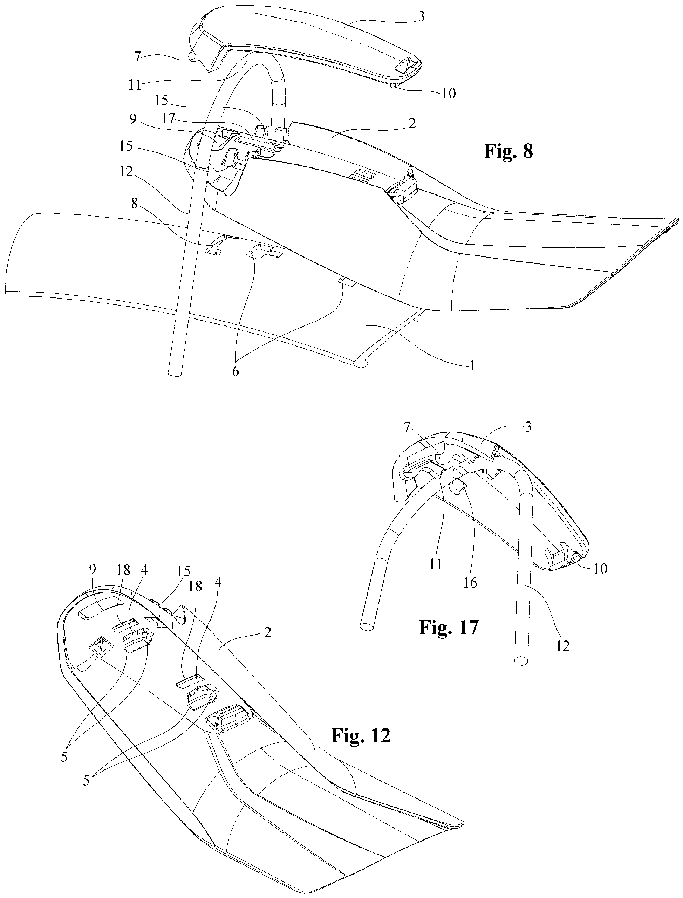

fig. 8 shows the device of fig. 3 from an exploded perspective view;
fig. 9 shows a perspective view of the device of fig. 5 according to a vertical section along the symmetry axis;
fig. 10 shows what is set out in the previous figure from a plan view;
fig. 11 shows a perspective view from below of the body applied to the fender;
figs. 12 and 13 show what is set out in fig. 11 separately for the body and for the fender;
figs. 14 and 15 show two different perspective views from below of the plate or cover highlighting the first and second connection devices arranged respectively in the front and in the rear of the plate;
fig. 16 shows in isolation the connecting arch of the fender rods; fig. 17 shows the plate in isolation and below it the arch, highlighting their relationship;

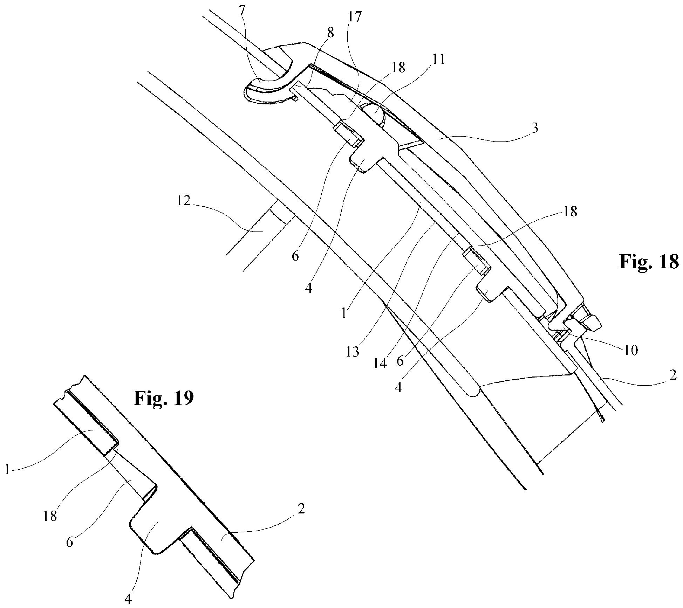

fig. 18 shows an enlarged view, and fig. 19 highlights, the pre-assembly raised parts near the overhang underneath the body and facing the fender.

Detailed description of an example of a preferred embodiment With reference to the drawings, we can see the fact that what is new in particular of this invention is both the structure of the splash guard, as well as the relative connection to the fender and its combination with the fender holder rods.

The connection and the security of the maintenance of the connection between the fender 1 and the splash guard 2 and plate 3 are made by a series of connecting devices which join together according to a direction of connection movement and are retained following a different direction movement, preferably orthogonal to the first.

In particular, the first connection between the body 2 and the fender 1 is carried out with the insertion of a finned overhang 4, which is equipped with fins 5 at the end of the overhang 4, which enters in a vertical direction within a first opening 6 of the fender 1, and by making the head with 5 fins of the overhang 4 completely protrude beyond the thickness of the fender 1, where said opening configured approximately as a T-shape in the fender itself, and subsequently with reciprocal sliding between the body 2 and the fender 1, with an orthogonal direction compared to previous vertical direction, the fins 5 of the finned head of the overhang 4 are arranged below the fender itself, near the rod of the T-shape of the aperture, preventing the body 2 moving away from the fender 1.

The travel of this aforementioned sliding of the overhang 4 within the groove of the rod of the T-shape up to the end stop next to the overhang 4 itself against the initial part of the rod of the T-shape of the opening 6 on the fender.

Moreover, near the finned overhang 4, there is an additional raised sawtooth part, defined as the pre-assembly raised part 18, which rises up from the inner surface of the body 2 and also faces the fender. Said pre-assembly raised part 18, enters forcibly with its tooth, due to the elasticity of the materials, overcoming an initial interference, and engages the T-shaped opening 6, and in particular the top cut of the T-shape, after which the relative sliding between the body 2 and the fender 1 has brought the overhang 4 near to the beginning of the vertical rod of the T-shape of the opening 6. The body 2 is temporarily installed on the fender 1 in a sufficiently durable manner for successive completion operations, or for a pre-assembly of the fender for installers.

The completion of the fastening takes place with the subsequent installation operations of the cover or plate 3.

The cover or plate 3, once installed effectively prevents the return movement, with an equal and opposite direction to the sliding of the reciprocal connection, between the body 2 and the fender 1.

In particular, the plate 3 has at a front end the first connection devices 7 configured as a tooth with an arched profile, which can enter within a second aperture 8 of the fender 1, and pass through it by means of a rotational movement of the plate in approach to the body 2.

Since said opening 8 is near a wall of the body 3, it prevents the equal return movement and in the direction opposite to said sliding movement previously carried out for the connection of the fender 1 and the body 2.

To ensure that said movement of the body 2 resting on the fender 1, both in the direction of the connection and in the opposite release direction between the body 2 and the fender 2, is absorbed and countered by the arched tooth, it passes through not only the opening 8 in the fender but also a corresponding opening 9 in the body 2, so that the body 2 is stably fixed onto the fender 1.

It is clear that the movement to remove said plate 3 corresponds to a rotation equal and opposite in direction to that of installation. To ensure the secure stop of said plate 3 with respect to the body 2, there are second retention connection devices 10, like for example a recess or a protrusion or a small tooth, which overcomes a temporary interference on body 2. Preferably said connection devices 10 for retaining the plate 3 are arranged at the end opposite to that where the first connection devices are located 7, i.e. of the curved tooth.

Said connection between the body 2 and plate 3 on the fender 1 is firm and sufficient for keeping itself securely against the fender 1, without the need of other elements, screws, rivets or the like.

Moreover, this connection can be easily reversed in order to remove the splash guard from the fender, without damaging or tampering with the various connection elements.

In a significant variant, this connection can contain and hold the part of the connection arch 11 of the fender stay rods 12, which are then kept on the outside of the fender 1 itself and do not have the drawback of an installation up against the inner surface 13 of the fender itself.

In fact, after the installation of the body 2, which is held on the fender next to the outer surface 14, without the need for an operator having to intervene, it is possible to install the fender stay rods 12 joined at the top by a connecting arch 11.

In fact, the operator can correctly position the pair of rods 12 by placing the arch 11 in the housing 15 on the outer surface of the body 2 with one hand, and with the other hand he can insert the tooth (first connection devices 7) of the plate 3 in the relative slots 8, 9, and move the plate by turning it until it is above the body 2, fixing it on it by means of pressure that overcomes the initial interference between the second retention devices 10 and relative protrusions on the body 2.

It should also be noted that the plate also behaves like a lever hinged on the tooth and operated by the operator from the opposite side, whereas in an intermediate position it presses and forcibly pushes the arch 11 within the relative seat 15 in a secure and solid position.

This pressure exerted by the plate 3 on the arch 11 of the fender stay rods 12 is very useful so that the constant stresses on the fender stay rods 12 or on the fender 1 or on the splash guard body 2 cannot leave the retention rendering uncertain the connection and joint between the fender rods 12 with the fender 1 itself, by means of the body 2.

Also the maintenance of the bicycle is made easier since the operator only has to lift by turning the plate 3 to release the connection arch 11 of the fender stay rods 12.

To further facilitate the operator in the assembly, the arch 11 conveniently has in the inner part of the arch, namely in the part facing towards the body 3, an indentation 16 or a recess. In fact, said indentation 16 of the arch that corresponds to a respective centring raised part 17 on the outer surface of the body, makes its positioning during assembly precise and immediate.

Preferably said centring raised part 17 is at the center line and advantageously interposed between the housings 15 of the arch.

When subsequently the housings 15 of the arch 11 are completed with the positioning of the plate 3, there is a stiffening of the connection between the indentation 16 and the centring raised parts 17 creating an interlocking centring.

## Claims

1. A bicycle fender with splash guard applied to the end of the fender, comprising at least two elements: first, the main body of the splash guard (2), connected to the outside of a fender (1) and a second element, cover or plate (3), which overlaps the body (2) ensuring it is fixed and preventing the body (2) from detaching from the fender (1), **characterised by** the fact that said body (2) can connect to the outer surface of the end of a fender (1), by means of at least one overhang (4) equipped with fins (5), which extends from the body (2) to the fender (1), and that, after crossing a corresponding T-shaped opening (6) in the underlying fender (1), with their fins (5) placed under the fender (1) prevents the body (2) detaching by lifting up from the fender (1); said second element, cover or plate (3), connects to the outside of that main splash guard body (2) with the first (7) and second connection devices (10); where said first devices (7) are placed near a first front end of the plate (3) and through a window (8) in the fender (1) constitute a limit stop for the movement of the body (2), preventing the movement of the body (2) opposite to that connecting to the fender (1), while those second connection devices (10) are placed near the rear end of the plate (3) and attach to the body (2) after overcoming an initial interference.

2. A bicycle fender with splash guard applied to the end of the fender according to claim 1 **characterised by** the fact that said main splash guard body (2) is also fitted with one or more housings (15), on its outer surface, and opposite to the inner one with which it comes into contact with the fender (1), to accommodate, at least partially, the arch (11) connecting the fender stay rods (12).

3. A bicycle fender with splash guard applied to the end of the fender according to the previous claim **characterised by** the fact that said housing (15) for the arch (11) joining the rods (12) is further defined around said arch (11) with the installation of said plate (3), which comprises an upper part of said housing (15).

4. A bicycle fender with splash guard applied to the end of the fender according to claim 2 or 3 **characterised by** the fact that said upper part of said housing (15) compresses and pushes the arch (11) of the fender stay rods (12) into the housing (15) in the upper part of the body (2).

5. A bicycle fender with splash guard applied to the end of the fender according to claim 1 **characterised by** the fact that said plate (3) acts as a lever, hinged to the first connection devices (7) with the fender (1) within the aperture (8) in the fender (1) itself and with the lever arm defined by the plate (3) itself and the pressure of the thrust on the arch (11) between the hinging and the lever arm.

6. A bicycle fender with splash guard applied to the end of the fender according to claim 1 **characterised by** the fact that also the body (2) has a through-opening (9) in its front part at the aperture (8) of the underlying fender (1) for the crossing of the first connection devices (7) of the plate (3) with the fender (1).

7. A bicycle fender with splash guard applied to the end of the fender according to claim 1 **characterised by** the fact that said first connection devices (7) of the plate (3) are composed of an overhang with an arched profile which requires the installation of the plate (3) with a rotation manoeuvre up to the engagement of the plate (3) with the second rear connection devices (10) on the stop tab of the body (2).

8. A bicycle fender with splash guard applied to the end of the fender according to claim 1 **characterised by** the fact that near the overhang (4) equipped with fins (5), there is an additional sawtooth raised part, defined as a pre-assembly raised part (18), which rises up from the inner surface of the body (2) and facing the fender, where the pre-assembly raised part (18), with its tooth forcibly enters due to the elasticity of the materials, overcoming an initial interference, and engages the T-shaped opening (6), and in particular the upper cut of the T, after which the sliding relative to the body (3) and the fender (1) has brought the overhang (4) near the start of the vertical rod of the T-shaped opening (6) .

9. A bicycle fender with splash guard applied to the end of the fender according to claim 1 **characterised by** the fact that the arch (11) of the rods (12) supporting the fender is in a central position and facing the inside of the arch (11), and thus facing towards the body (3), of one indentation (16) or recess, which connects, taking part in the engagement with a corresponding cantering raised part (17) on the body (3), on its outer surface, centring the position of the fender stay rod (12) with respect to the body (3).

## Patentansprüche

1. Fahrradschutzblech mit Spritzschutz, der am Ende des Schutzblechs angebracht ist und mindestens zwei Elemente umfasst: erstens, der Hauptkörper des Spritzschutzes (2), der mit der Außenseite eines Schutzblechs (1) verbunden ist, und ein zweites Element, eine Abdeckung oder Platte (3), die den Körper (2) überlappt, um sicherzustellen, dass er befestigt ist und verhindert, dass sich der Körper (2) vom Schutzblech (1) löst, **gekennzeichnet durch** die Tatsache, dass der Körper (2) mit der Außenfläche des Endes eines Schutzblechs (1) verbunden werden kann, und zwar mittels mindestens eines mit Rippen (5) ausgestatteten Überhangs (4), der sich vom Körper (2) bis zum Schutzblech (1) erstreckt und dass nach Überqueren einer entsprechenden T-förmigen Öffnung (6) in dem darunterliegenden Schutzblech (1) mit ihren unter dem Schutzblech (1) angeordneten Rippen (5) verhindert wird, dass sich der Körper (2) durch Anheben aus dem Schutzblech (1) löst; wobei das zweite Element, die Abdeckung oder Platte (3) mit der Außenseite dieses Hauptspritzschutzkörpers (2) mit der ersten (7) und der zweiten Verbindungsvorrichtung (10) verbunden ist; wobei die ersten Vorrichtungen (7) in der Nähe eines ersten vorderen Endes der Platte (3) angeordnet sind und durch ein Fenster (8) in dem Schutzblech (1) einen Anschlag für die Bewegung des Körpers (2) bilden, der die Bewegung des Körpers (2) gegenüber der Verbindung mit dem Schutzblech (1) verhindert, während diese zweiten Verbindungsvorrichtungen (10) in der Nähe des hinteren Endes der Platte (3) angeordnet sind und nach Überwindung einer anfänglichen Interferenz an den Körper (2) anhaften.

2. Fahrradschutzblech mit Spritzschutz, der am Ende des Schutzblechs nach Anspruch 1 angebracht ist, **gekennzeichnet durch** die Tatsache, dass der Hauptspritzschutzkörper (2) auch an seiner Außenfläche und gegenüber dem Innengehäuse, mit dem er in Kontakt mit dem Schutzblech (1) kommt, mit einem oder mehreren Gehäusen (15) versehen ist, um zumindest teilweise den Bogen (11) aufzunehmen, der die Schutzblechhaltestange (12) verbindet.

3. Fahrradschutzblech mit Spritzschutz, der am Ende des Schutzblechs angebracht ist, nach dem vorhergehenden Anspruch, **gekennzeichnet durch** die Tatsache, dass das Gehäuse (15) für den Bogen (11), der die Stange (12) verbindet, weiter um den Bogen (11) herum mit der Installation der Platte (3) definiert ist, die einen oberen Teil des Gehäuses (15) umfasst.

4. Fahrradschutzblech mit Spritzschutz, der am Ende des Schutzblechs nach Anspruch 2 oder 3 angebracht ist, **gekennzeichnet durch** die Tatsache, dass der obere Teil des Gehäuses (15) den Bogen (11) der Schutzblechhaltestangen (12) in das Gehäuse (15) im oberen Teil des Körpers (2) drückt und schiebt.

5. Fahrradschutzblech mit Spritzschutz, der am Ende des Schutzblechs nach Anspruch 1 angebracht ist, **gekennzeichnet durch** die Tatsache, dass die Platte (3) als ein Hebel wirkt, der an den ersten Verbindungsvorrichtungen (7) mit dem Schutzblech (1) innerhalb der Öffnung (8) im Schutzblech (1) selbst verbunden ist und mit dem Hebelarm, der durch die Platte (3) und dem Druck des Schubs auf den Bogen (11) zwischen dem Gelenk und dem Hebelarm selbst definiert ist.

6. Fahrradschutzblech mit Spritzschutz, der am Ende des Schutzblechs nach Anspruch 1 angebracht ist, **gekennzeichnet durch** die Tatsache, dass auch der Körper (2) eine Durchgangsöffnung (9) in seinem vorderen Teil an der Öffnung (8) des darunterliegenden Schutzblechs (1) zum Überqueren der ersten Verbindungsvorrichtungen (7) der Platte (3) mit dem Schutzblech (1) aufweist.

7. Fahrradschutzblech mit Spritzschutz, der am Ende des Schutzblechs nach Anspruch 1 angebracht ist, **gekennzeichnet durch** die Tatsache, dass die ersten Verbindungsvorrichtungen (7) der Platte (3) aus einem Überhang mit einem gewölbten Profil bestehen, das die Installation der Platte (3) mit einem Rotationsmanöver bis zum Eingriff der Platte (3) mit den zweiten hinteren Verbindungsvorrichtungen (10) an den Anschlagansatz des Körpers (2) erfordert.

8. Fahrradschutzblech mit Spritzschutz, der am Ende des Schutzblechs nach Anspruch 1 angebracht ist, **gekennzeichnet durch** die Tatsache, dass in der Nähe des mit Rippen (5) ausgestattenen Überhangs (4) ein zusätzlicher sägezahnartiger erhöhter Teil vorhanden ist, der als ein vormontierter erhöhter Teil (18) definiert ist, der sich von der Innenseite des Körpers (2) erhebt und dem Schutzblech zugewandt ist, wo der vormontierte erhöhte Teil (18) mit seinem Zahn aufgrund der Elastizität der Materialien zwangsweise eintritt, eine anfängliche Interferenz überwindet und in die T-förmige Öffnung (6) und insbesondere in den oberen Schnitt des T eingreift, nach der das Gleiten relativ zu dem Körper (3) und dem Schutzblech (1) den Überhang (4) nahe dem Beginn der vertikalen Stange der T-förmigen Öffnung (6) gebracht hat.

9. Fahrradschutzblech mit Spritzschutz, der am Ende des Schutzblechs nach Anspruch 1 angebracht ist, **gekennzeichnet durch** die Tatsache, dass der Bogen (11) der Stangen (12), die das Schutzblech tragen, in einer zentralen Position liegt und der Innenseite des Bogens (11) zugewandt ist und somit dem Körper (3) einer Vertiefung (16) oder Aussparung zugewandt ist, die sich an dem Eingriff mit einer entsprechenden zentrierten erhöhten Teil (17) an dem Körper (3) anschließt und an seiner Außenfläche verbindet, wobei die Position der Schutzblechhaltestangen (12) in Bezug auf den Körper (3) zentriert wird.

## Revendications

1. Garde-boue de vélo doté de bavette à l'extrémité du garde-boue (1) comprenant au moins deux éléments : un premier élément, le corps (2) principal de la bavette, qui s'assemble sur l'extérieur du garde-boue (1) et un second élément, couvercle ou plaquette (3), qui chevauche le corps (2) assurant la fixation et empêchant le corps (2) de se détacher du garde-boue (1) ; **caractérisé par le fait que** ledit corps (2) est en mesure de s'assembler sur la surface extérieure terminale d'un garde-boue (1), au moyen d'un bosselage (4) doté d'ailettes (5) qui s'étend du corps (2) vers le garde-boue (1), et qui, après avoir traversé une ouverture correspondante à T (6) présente dans le garde-boue dessous (1), avec les propres ailettes (5) disposées sous le garde-boue (1) évite que le corps (2) puisse se détacher en se soulevant du garde-boue (1) même ; ledit second élément, couvercle ou plaquette (3), est lié sur l'extérieur dudit corps (2) bavette principale, avec des premiers (7) et des seconds moyens d'union (10) ; lesdits premiers moyens d'union (7) sont disposés à proximité d'une première extrémité antérieure de la plaquette (3) et traversant une fenêtre (8) dans le garde-boue (1) construisent une butée pour le mouvement du corps (2), empêchant le mouvement contraire du corps (2) d'association au garde-boue, pendant que lesdits seconds moyens d'union (10) sont disposés à proximité de l'extrémité postérieure de la plaquette (3) et s'unissent au corps (2) après le surpassement d'une interférence initiale.

2. Garde-boue de vélo doté de bavette à l'extrémité du garde-boue (1) selon la revendication 1 **caractérisé par le fait que** ledit corps (2) principal de la bavette est en plus doté d'un ou plusieurs sièges (15), sur sa surface extérieure, et opposée à celle intérieure avec laquelle elle est en contact avec le garde-boue (1), pour accueillir, au moins partiellement, l'arc (11) de jonction des tringles (12) de support de garde-boue.

3. Garde-boue de vélo doté de bavette à l'extrémité du garde-boue (1) selon la revendication précédente **caractérisé par le fait que** ledit siège (15) pour l'arc (11) de jonction des tringles (12) est mieux défini autour dudit arc (11) avec l'installation de ladite plaquette (3), laquelle comprend une partie supérieure dudit siège (15).

4. Garde-boue de vélo doté de bavette à l'extrémité du garde-boue (1) selon la revendication 2 ou 3 **caractérisé par le fait que** ladite partie supérieure dudit siège (15) comprime et pousse sous pression l'arc (11) des tringles (12) de support de garde-boue dans le siège (15) défini dans la partie supérieure du corps (2).

5. Garde-boue de vélo doté de bavette à l'extrémité du garde-boue (1) selon la revendication 1 **caractérisé par le fait que** ladite plaquette (3) se comporte comme un levier, articulée avec les premiers moyens d'union (7) avec le garde-boue (1) dans une fenêtre (8) présente sur le garde-boue (1) même et avec le bras du levier défini de la plaquette (3) même et la pression sur l'arc (11) comprise entre l'articulation et le bras du levier.

6. Garde-boue de vélo doté de bavette à l'extrémité du garde-boue (1) selon la revendication 1 **caractérisé par le fait que**, même le corps (2) présente une ouverture (9) passant dans sa partie antérieure en correspondance avec la fenêtre (8) du garde-boue dessous (1) pour le passage des premiers moyens d'union (7) de la plaquette (3) avec le garde-boue (1).

7. Garde-boue de vélo doté de bavette à l'extrémité du garde-boue (1) selon la revendication 1 **caractérisé par le fait que** lesdits premiers moyens d'union (7) de la plaquette (3) sont constitués d'un bosselage au profil arqué qui impose une installation de la plaquette (3) selon une manoeuvre de rotation jusqu'à l'engagement de la plaquette (3) avec les seconds moyens d'union (10) postérieurs sur l'assemblage du corps (2).

8. Garde-boue de vélo doté de bavette à l'extrémité du garde-boue (1) selon la revendication 1 **caractérisé par le fait qu'**à proximité du bosselage (4) doté d'ailettes (5), se présente un autre relief à dent de scie, défini comme relief de pré assemblage (18) qui s'élève de la surface interne du corps (2) et également tourné vers le garde-boue, lequel relief de pré assemblage (18), avec la propre dent, entre forcément grâce à l'élasticité des matériaux, surmontant une interférence initiale, et occupe l'ouverture à T (6), et en particulier la coupe supérieure du T, après que le glissement relatif entre le corps (3) et le garde-boue (1) ait porté le bosselage (4) à proximité du début de la tringle verticale du T de l'ouverture à T (6).

9. Garde-boue de vélo doté de bavette à l'extrémité du garde-boue (1) selon la revendication 1 **caractérisé par le fait que** l'arc (11) des tringles (12) de support de garde-boue est doté, en position centrale et tourné à l'intérieur de l'arc (11), et donc vers le corps (3), d'un renfoncement (16) ou échancrure qui s'assemble, coopérant à l'encastrement avec un relief de centrage correspondant (17) présent sur le corps (3), sur la surface extérieure de celui-ci, centrant la position de la tringle (12) de support de garde-boue par rapport au corps (3).
